# EUROPEAN PATENT SPECIFICATION

(11) **EP 1 324 957 B1**
(45) Date of publication and mention of the grant of the patent: **05.01.2011**
(21) Application number: 01982927.4
(22) Date of filing: 11.10.2001
(51) Int. Cl.: C03C 4/08, C03C 4/10, C03C 4/02

(54) **GLASS COMPOSITION SUITABLE AS A CONTAINER FOR HIGH-GRADE NATURAL PRODUCTS AND GLASS PRODUCTS SUCH AS SHEET GLASS**
GLASZUSAMMENSETZUNG FÜR EINEN BEHÄLTER FÜR HOCHWERTIGE NATURPRODUKTE UND GLASPRODUKTE WIE SCHEIBENGLAS
COMPOSITION DE VERRE CONCUE POUR UN CONTENANT DE PRODUITS NATURELS DE HAUTE QUALITE, ET PRODUITS EN VERRE TELS QUE DU VERRE EN FEUILLE

(30) Priority: 12.10.2000 NL 1016392; 16.01.2001 US 761385
(43) Date of publication of application: 09.07.2003
(73) Proprietor: Viosol B.V., 4207 HG Gorinchem (NL)
(72) Inventor: ROHRER, Marcus, BE-2330 Merksplas (BE); KRAUSHAAR, Yves, CH-4600 Olten (CH)
(74) Representative: Land, Addick Adrianus Gosling
(86) International application number: PCT/NL2001/000748
(87) International publication number: WO 2002/030842

(56) References cited:
- DE-A- 2 144 106
- DE-A- 19 532 800
- DE-A- 19 532 807
- DE-C- 493 857
- FR-A- 500 262
- GB-A- 263 410
- GB-A- 430 387
- US-A- 2 693 422
- US-A- 5 612 263
- NATURA U ET AL: "FORMATION OF RADIATION DEFECTS IN SILICATE AND BOROSILICATE GLASSESCAUSED BY UV LAMP AND EXCIMER LASER IRRADIATION" GLASS SCIENCE AND TECHNOLOGY (GLASTECHNISCHE BERICHTE),DEUTSCHE GLASTECHNISCHE GESELLSCHAFT,DE, vol. 72, no. 9, September 1999 (1999-09), pages 295-301, XP000854003 ISSN: 0017-1085
- PATENT ABSTRACTS OF JAPAN vol. 1997, no. 02, 28 February 1997 (1997-02-28) & JP 08 283038 A (NIPPON ELECTRIC GLASS CO LTD), 29 October 1996 (1996-10-29)
- PATENT ABSTRACTS OF JAPAN vol. 1997, no. 11, 28 November 1997 (1997-11-28) & JP 09 188542 A (TOSHIBA GLASS CO LTD), 22 July 1997 (1997-07-22)

## Description

The present invention relates to a container for high-grade natural products, a glass composition for such a container, and the use of this composition for a container for high-grade natural products, or for glass products such as sheet glass.

Natural products, such as natural dietary supplements, phyto-therapeutic agents, etheric oils or homeopathic medicines, are high-grade products.

A problem in storing this type of high-grade products is that they are susceptible to decay, whereby the quality of this type of products decreases during storage.

"Formation of radiation defects in silicate and borosilicate glasses caused by UV lamp and excimer laser irradiation" (Glastechnische Berichte, vol. 72, no. 9, Sept. 1999) by Natura and Ehrt, describes a low cost container glass for solar disinfection of drinking water. A high transmission in UV-B light is required (280-320 nm), and achieved by doping basic glass (soda lime silica glass) with oxide of Ni or Co. Further, a reduction reaction of Fe3+ to Fe2+ is performed to improve characteristics.

DE 195 32 807 A, describes a method for using photonic energy from sunlight especially for disinfection of drinking water in a reactor. A glass composition is used to filter the sunlight before it enters the reactor. A relatively high transmission of UV light between 300 and 390 nm is envisaged. To achieve this goal, several basic glass compositions ('alkalisilikatglas') are doped with nickel oxide.

GB 430,387 A, describes an incandescent lamp wherein the glass of the bulb arrests visible light of a wavelength above 0.5 micron (i.e. approx. 500 nm), and allowing passage of light of lower wavelength. To achieve such, the glass of the bulb is based on normal kind of glass to which is doped with oxides of Co, Ni and Cu.

US 2 693 422 describes glass containers absorbing visible light and transmitting UV. Glasses contain as colorants oxides of Fe, Cu, Ni and Ce.

According to a first aspect of the present invention a container is provided for high-grade natural products such as natural dietary supplements, phyto-therapeutic agents, etheric oils or homeopathic medicines, which container is formulated such that UV light can permeate, and visible light substantially cannot permeate.

A container according to the present invention thus provides full protection against the decay-causing frequencies of visible light and is on the other hand permeable in the violet and ultraviolet spectrum.

Other technical characteristics of the container according to the present invention are stated in claims 2-6.

According to a second aspect of the present invention there is provided a composition for glass, preferably violet glass, as according to claims 1.

Sunlight consists on the one hand of the visible light spectrum (violet, blue, green, yellow, orange, red) and on the other of the invisible Ultraviolet- and Infrared spectrum. Sunlight is of enormous importance for the growth of all plants. No life is possible without light. When plants have been ripened in the sun, they are harvested and stored in a specific manner. If plants are exposed to further sunlight after the ripening process, a decomposition process can then begin.

In practice most agents (herbal tinctures and etheric oils amongst others) are packaged in standard brown glass or in plastic. Transmission measurements carried out by the inventors clearly show that brown glass permeates the visible light and thus does not provide sufficient protection (see figure 1). The same is seen in the case of green and blue glass, both permeate the whole light spectrum (see figures 2 and 3). The different frequencies of visible light cause a kind of frequency chaos in the jar which enhances the decomposition process.

In contrast to glass, plastic jars are porous and allow through oxygen. The product quality is reduced by oxidation. They often also give off harmful gases (particularly at higher temperatures).

In accordance with quantum physics, violet and ultraviolet (UV-A) light contain the highest energy charge of all spectral colours, the smaller the wavelength or the higher the frequency, the larger the energy quantum. Violet and UV-light not only have the smallest wavelength (and the highest frequency) of the light spectrum but are also the richest in energy. A unique high-energy environment is hereby created in the glass composition according to the present invention. The visible light is kept out, the decomposition process is slowed down considerably. A container according to the present invention hereby has a preserving capacity.

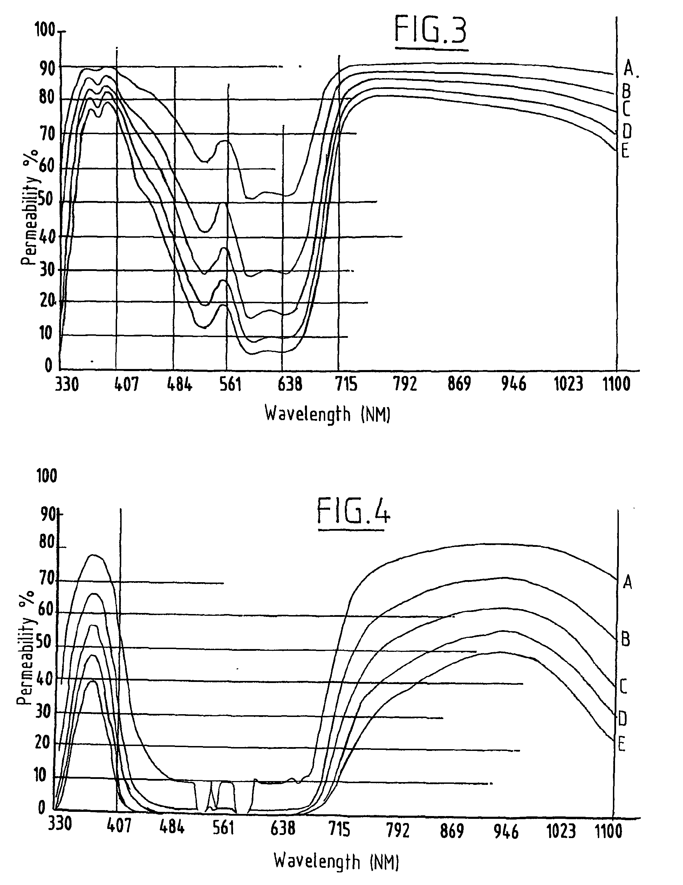

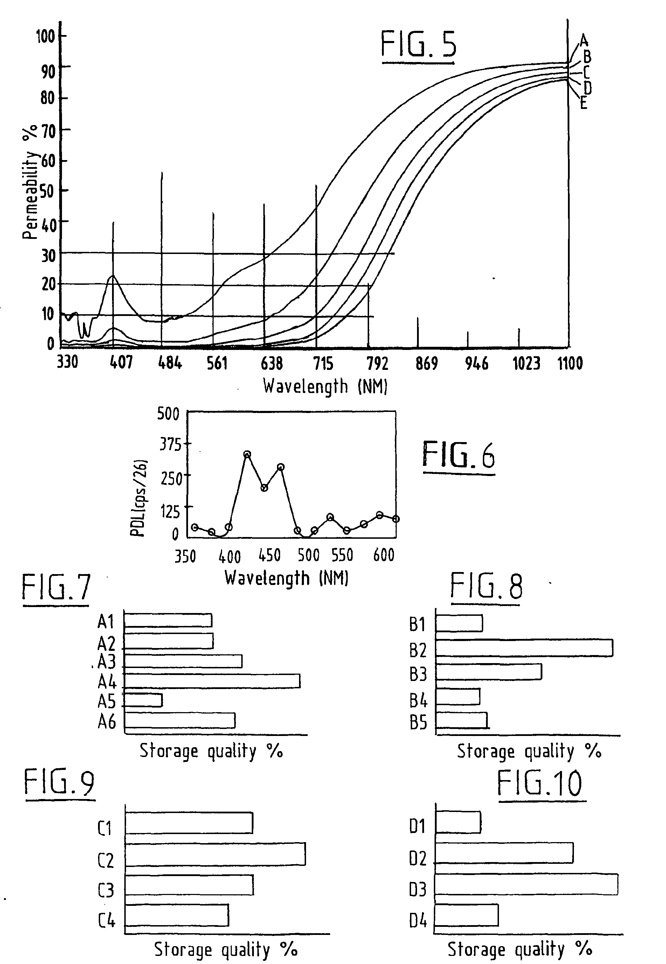

The glass composition according to the present invention appears black from the outside. A specific violet colour becomes visible when the glass is held to the light. The transmission curve clearly shows the difference between violet and black glass (figures 4 and 5). Black glass prevents permeation of light in the visible spectrum from a determined thickness, but no longer allows permeation of energy-rich UV/-violet light.

### Experiment 1:

A series of tests was carried out to determine the optimal colour of violet.

The objective, for an average glass thickness of 4 mm, was as follows:
a) to achieve a permeability of a maximum of 40%-50% in the UV/violet spectrum between 320 nm - 440 nm wavelength (nm = nanometre),
b) to achieve a complete shielding in the visible part of the light spectrum between 450 nm - 680 nm wavelength,
c) to achieve a desired permeability of about 50%-60% in the Infrared-range between 700 - 1100 nm wavelength.

By means of transmission measurements it is possible to monitor precisely whether a glass mixture fulfills the objectives.

The required transmission curve was achieved by adding a number of metal oxides to the basic formula for clear glass, i.e. Cobalt oxide, Nickel oxide and Manganese oxide (in the form of Mangalox) and Chromium oxide (in the form of Portachrom), and Iron oxide (in the form of Mangalox and Portachrom).

Because each oxide has a very specific influence on the transmission curve, the curve can be changed by altering the respective ratios. The final result can be seen in figure 4.

### Glass formula:

Base for clear glass (per charge):
   quartz sand = 442.6 kg
   dolomite = 90.8 kg
   soda = 133.0 kg
   calcium carbonate = 46.0 kg
   frit (1) = 19.0 kg

Additives for the specific permeability/colour (per charge):
Cobalt oxide = 2.2 kg
Nickel oxide = 1.2 kg
Mangalox (2) = 6.5 kg
Portachrom (3) = 1.2 kg
   (1) Frit: A1203, Fe 203, TiO3, CaO, MgO, Na2O, KaO, Na2CO3.
   (2) Mangalox: MnO2 = 79%, MnO = 3%, Fe2O3 = 5.5%, Al2O3= 3%, SiO2 = 5%, Na2O = 0.1%, K2O = 0.7%, MgO = 0.2%, CaO = 0.1%.
   (3) Portachrom: Cr203 = 44%, FeO = 24%, SiO2 = 3.5%, Al2O3/TiO2 = 15%, MgO = 10%.

A glass composition according to the present invention comprises the following components by weight percentage:

| | |
|---|---|
| SiO2 | 65-75% |
| Na2O | 12-16% |
| CaO | 8-10% |
| MgO | 2-4% |
| Al2O3 | 0.5-2% |
| Fe2O3 | 0.1-0.3% |
| K2O | 0.34-0.45% |
| SO3 | 0.2-0.3% |
| CoO | 0.2-0.4% |
| NiO | 0.10-0.35% |
| MnO | 0.3-0.9% |
| Cr2O3 | 0.03-0.1% |

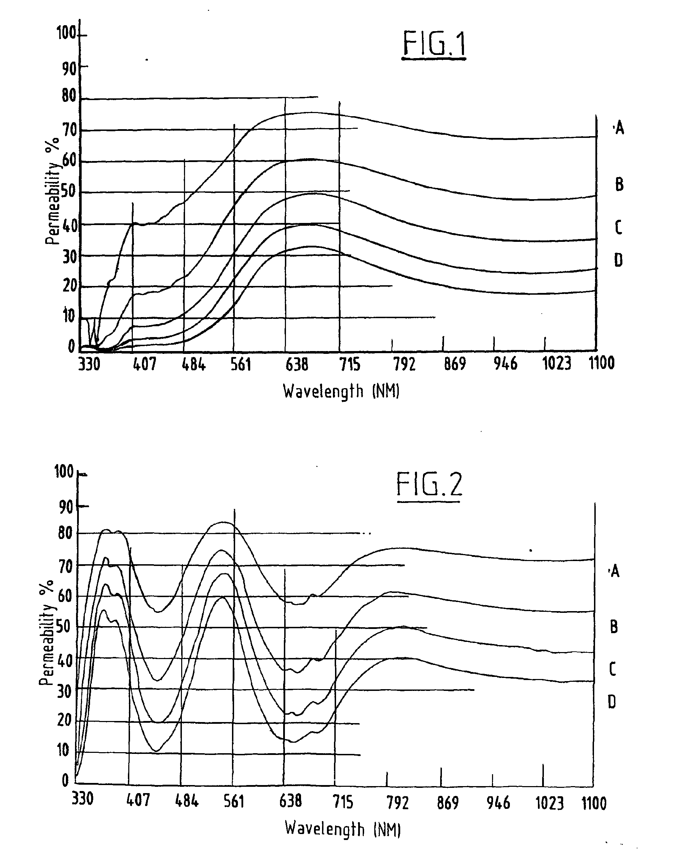

Figures 1 to 5 show the permeability percentage of:

| | |
|---|---|
| Fig. 1 - brown glass with a thickness of : | A - 1 mm |
| | B - 2 mm |
| | C - 3 mm |
| | D - 4 mm |
| | E - 5 mm |
| | |
| Fig. 2 - green glass with a thickness of: | A - 1 mm |
| | B - 2 mm |
| | C - 3 mm |
| | D - 4 mm |
| | E - 5 mm |
| Fig. 3 - blue glass with a thickness of: | A - 1 mm |
| | B - 2 mm |
| | C - 3 mm |
| | D - 4 mm |
| | E - 5 mm |
| Fig. 4 - violet glass according to the present invention with a thickness of : | A - 1 mm |
| | B - 2 mm |
| | C - 3 mm |
| | D - 4 mm |
| | E - 5 mm |
| Fig. 5 - black glass with a thickness of: | A - 1 mm |
| | B - 2 mm |
| | C - 3 mm |
| | D - 4 mm |
| | E - 5 mm |

The advantages of the glass composition according to the present invention compared to normal glass:
- optimal protection against light
- quality retention over a long period of time
- better market position relative to other suppliers
- 100% recyclable (green-glass container)

### Experiment 2:

### Practical example with violet glass according to the present invention: ultra-weak-photon research with Spirulina algae

Ultra-weak light emissions of biological systems are measured. In a test fresh Spirulina algae were packed in different materials (violet glass according to the present invention, brown glass, aluminium foil and plastic) and kept for a number of weeks. The content of ultra-weak-photons was then measured. The violet glass according to the present invention showed by far the best results.

### Bio-photon experiments on spirulina

### Materials and methods

### Sample collection

A Spirulina sample, in powder form and stored in plasticized aluminium foil (sample from Hawaii; control) was poured into 3 small storage containers of plastic, brown or violet glass according to the present invention (3 samples of 100 ml, about 60 g). A sample from California in brown glass was used as a further control. The sample was supplied by Spirulina International B.V. (Batch A1-A6).

A further Spirulina sample in powder form was poured directly into a violet glass and into bags of plasticized aluminium foil in Hawaii (Batch B1-B2) and the sample stored in bags of aluminium foil was taken to Tilburg, Netherlands, in 3 small storage containers of plastic, brown or violet glass (3 samples of 100 ml, about 60 g) (Batch B3-B5). Further comparative samples from California in plastic, brown or violet glass according to the present invention and in aluminium served as additional controls (Batch C1-C4). These were supplied by Spirulina International B.V.

An additional Spirulina sample, in powder form, was poured directly into 4 different storage materials of aluminium, violet glass, plastic and brown glass (D1-D4) at Cyanotech on Hawaii. A further, final Spirulina sample in powder form (violet glass) was made available.

### Quantity

The Spirulina samples were measured in a quartz sample glass (2.2 cm x 2.2 cm x 3.8 cm), wherein the capacity of this sample glass is 15 ml.

### Test structure

### Photon measurement in the laboratory of Fritz-Albert Popp

The selected substances were measured a number of times using the ultra-weak photon apparatus of Fritz-Albert Popp of the Kaiserslautern Centre of Technology. In this case the Spirulina samples were measured directly in powder form; Spirulina samples of 300 mg were dissolved in 15 ml of cell culture medium (DMEM) and 10 ml of this solution was used for the measurement. The energy content of the solid samples and the solutions was determined as follows: The sample poured into a quartz sample glass was tested for its intrinsic emission (UL) and for the photon radiation after excitation with monochromatic light (300-700 nm) (PDL) and white light. The excitation time was 30 seconds. The interval in the measurements for recording the photon intensity after excitation with white light was always 40 ms.

### Development of photon measurement in time in the laboratory of Fritz-Albert Popp

The selected samples were measured twice - 3 times within a month. The solid samples and the Spirulina samples measured in DMEM were measured immediately after preparation and 2 hours later on each measuring day. The Spirulina sample for determining the light absorption capacity in the cell culture medium DMEM was measured after excitation with monochromatic light in the wavelength range 360-600 nm.

### Results and discussion

### Photon intensity of Spirulina after excitation with monochromatic light between 360-600 nm for determining the light absorption capacity

Figure 6 shows the induced emission (PDL) of the ultra-weak photon emission in the wavelength range 360-600 nm in an untreated Spirulina sample, which was dissolved in the cell culture medium DMEM. The initial intensity of the ultra-weak photon radiation after monochromatic radiation was measured.

It was possible to excite the Spirulina dissolved in the cell culture medium over the whole measured wavelength range, which indicates that Spirulina is capable of absorbing practically all sunlight. The Spirulina dissolved in the cell culture medium can be very strongly excited in the UVA-range and the violet-blue range (360-460 nm).

### The storage quality of Spirulina in different materials

Spirulina powder from Hawaii (A1-A5; H) and from California (A6; C) in batch A were stored for two months in different materials, and the storage quality was determined by means of ultra-weak photon radiation, as shown in Figure 7.

The results shown in Figure 7 show clearly that the Spirulina sample from Hawaii which was stored in violet glass has the best storage quality. The storage quality of the tested materials is shown in the following order: violet glass (A4) > plastic (A3) > brown glass (A2) > aluminium (A1).

The Spirulina reference in California (A6), which was stored in brown glass, is comparable to the storage quality of the Spirulina sample from Hawaii, which was stored in plastic. The significantly lowest storage quality, which was found in the Spirulina sample which was stored in aluminium for 6 months, is most probably the consequence of the prolonged storage in this material. The results shown here indicate that violet glass according to the present invention had a storage quality which is a factor of two better, and this confirmed the results which were found with the sunlight globuli which were stored in violet glass.

Figure 8 shows the results of the Spirulina samples from Hawaii, which were tested in batch B. Spirulina powder was poured into plasticized aluminium foil (B1) or into violet glass immediately after spray-drying in Hawaii. Two weeks later the Spirulina stored in aluminium foil was transferred to violet glass, brown glass and plastic. A significant reduction in quality was observed in the Spirulina sample stored in aluminium. This reduction was the result of either the transport in the aircraft (cosmic radiation) or of the X-rays used by customs to screen luggage and passengers. The best storage quality was found in the Spirulina sample which was stored in violet glass and which was poured therein immediately after spray-drying (B2). The Spirulina sample (B3) which was transferred to violet glass after transport recovered best from the transport shock of the Spirulina samples stored in aluminium. The storage quality was reduced in this experiment in the following sequence: violet glass (B2; B3) > plastic (B5) > aluminium (B1) > brown glass (B4).

Further ultra-weak-photon experiments were performed on DIC-powder from Califonia (C). Figure 9 shows the storage qualities of these different samples in Batch C. As shown in Figure 4, the best storage quality was here also achieved with violet glass (C2) as the material for Spirulina powder from California. The storage quality was reduced in the following order: violet glass (C2) > brown glass (C3) > aluminium (C1) > plastic (C4).

In a further storage experiment in batch D on Spirulina powder from Hawaii, violet glass according to the present invention was compared to a newly developed foil of violet glass, the usual transparent foil and the reference aluminium (see Figure 10).

The storage quality decreased in the following sequence: Violet glass (D3) > violet foil (D2) > transparent foil (D4) > aluminium (D1). The new experiments confirm the findings of previous experiments, i.e. that storage in violet glass according to the invention significantly increases the quality of the Spirulina samples. It has also been found that the newly developed violet foil (D2) has a very good storage quality, although this quality does not reach the same level as that of violet glass according to the present invention (D3). The violet foil (D2) is however much better than the usual materials such as transparent foil (D4) or aluminium (D1). It therefore forms an excellent unbreakable alternative for the transport of Spirulina samples.

The present invention is not limited to the above description; the rights sought are defined by the following claims.

## Claims

1. Composition for glass, comprising:
- a basic formula for clear glass, and
- mineral additives, which additives provide that the glass composition is substantially impermeable for visible light;
wherein the mineral additives comprise cobalt oxide, nickel oxide, manganese oxide, chromium oxide and iron oxide and wherein said composition for glass comprises the following components by wt. %:
- Si0₂ 65-75%
- Na₂0 12-16%
- CaO 8-10%
- MgO 2-4%
- A1₂0₃ 0.5-2%
- Fe₂0₃ 0.1-0.3%
- K₂0 0.34-0.45%
- S0₃ 0.2-0.3%
- CoO 0.2-0.4%
- NiO 0.10-0.35%
- MnO 0.3-0.9%
- Cr₂0₃ 0.03-0.1%

2. Container for high-grade natural products, such as natural dietary supplements, phyto-therapeutic agents, etheric oils or homeopathic medicines, said container is formulated such that UV light can permeate, and visible light substantially cannot permeate, wherein said container is made from a composition for glass according to claim 1

3. Container according to claim 2, wherein said container is permeable for infrared light.

4. Container according to claim 2 or claim 3, wherein said container has a wall thickness in the range of 1 to 10 mm, preferably 2 to 7 mm, most preferably 4 mm.

5. Container according to any of the claims 2 to 4, wherein said container has a permeability for UV light of between 20 and 70%, preferably between 40 and 50%, most preferably about 45%.

6. Container according to any of the claims 2 to 5, wherein said container has a permeability for IR light of at least 10%, preferably at least 20%, more preferably at least 40%, and most preferably about 54%.

7. Container according to any of the claims 2 to 6, wherein said container contains one or more high grade natural products, preferably spirulina.

8. Use of a composition for glass according to claim 1 for a container or glass, preferably sheet glass.

9. Glass made from a composition according to claim 1.

## Patentansprüche

1. Glaszusammensetzung, umfassend:
- eine Basisformulierung für Klarglas, und
- mineralische Additive, wobei durch die Additive die Glaszusammensetzung im Wesentlichen undurchlässig für sichtbares Licht ist;
wobei die mineralischen Additive umfassen Cobaltoxid, Nickeloxid, Manganoxid, Chromoxid und Eisenoxid, und wobei die Glaszusammensetzung die folgenden Komponenten in Gew.-% umfasst:
- SiO₂ 55-75%
- Na₂O 12-16%
- CaO 8-10%
- MgO 2-4%
- Al₂O₃ 0,5-2%
- Fe₂O₃ 0,1-0,3%
- K₂O 0,34-0,45%
- SO₃ 0,2-0,3%
- CoO 0,2-0,4%
- NiO 0,10-0,35%
- MnO 0,3-0,9%
- Cr₂O₃ 0,03-0,1%

2. Behälter für hochwertige Naturprodukte, wie natürliche diätetische Ergänzungsmittel, phytotherapeutische Agenzien, ätherische Öle oder homöopathische Arzneien, wobei der Container derart ausgestaltet ist, dass UV-Licht durch diesen hindurchgehen kann, und sichtbares Licht im Wesentlichen nicht durch diesen hindurchgehen kann, wobei der Behälter hergestellt ist aus einer Glaszusammensetzung gemäß Anspruch 1.

3. Behälter gemäß Anspruch 2, wobei der Behälter für Infrarotlicht durchlässig ist.

4. Behälter gemäß Anspruch 2 oder Anspruch 3, wobei der Behälter eine Wanddicke in einem Bereich von 1 bis 10 mm, bevorzugt 2 bis 7 mm, weiter bevorzugt 4 mm, aufweist.

5. Behälter gemäß einem der Ansprüche 2 bis 4, wobei der Behälter eine Durchlässigkeit für UV-Licht zwischen 20 und 70 %, bevorzugt zwischen 40 und 50 %, weiter bevorzugt etwa 45 %, aufweist.

6. Behälter gemäß einem der Ansprüche 2 bis 5, wobei der Behälter eine Durchlässigkeit für IR-Licht von mindestens 10 %, bevorzugt mindestens 20 %, weiter bevorzugt mindestens 40 %, und meist bevorzugt etwa 54 %, aufweist.

7. Behälter gemäß einem der Ansprüche 2 bis 6, wobei der Behälter ein oder mehrere hochwertige natürliche Produkte, bevorzugt Spirulina, enthält.

8. Verwendung einer Glaszusammensetzung gemäß Anspruch 1 für einen Behälter oder Glas, bevorzugt Flachglas.

9. Glas, hergestellt aus einer Zusammensetzung gemäß Anspruch 1.

## Revendications

1. Composition pour verre comprenant:
- une formulation de base pour verre transparent, et
- des additifs minéraux, lesquels additifs assurent que la composition de verre soit pratiquement imperméable à la lumière visible;
dans laquelle les additifs minéraux comprennent de l'oxyde de cobalt, de l'oxyde de nickel, de l'oxyde de manganèse, de l'oxyde de chrome et de l'oxyde de fer, ladite composition pour verre comprenant les composants suivants, en % en poids:
- SiO₂ 65 à 75 %
- Na₂O 12 à 16 %
- CaO 8 à 10 %
- MgO 2 à 4 %
- Al₂O₃ 0,5 à 2 %
- Fe₂O₃ 0,1 à 0,3 %
- K₂O 0, 34 à 0,45%
- SO₃ 0,2 à 0,3 %
- CoO 0,2 à 0,4 %
- NiO 0,10 à 0,35 %
- MnO 0,3 à 0,9 %
- Cr₂O₃ 0,03 à 0,1 %

2. Récipient pour produits naturels de haute qualité, tels que des compléments alimentaires naturels, des agents phyto-thérapeutiques, des huiles étheriques ou des médicaments homéopathiques, ledit récipient étant formulé de telle sorte que la lumière UV puisse le traverser et la lumière visible ne puisse pratiquement pas le traverser, lequel récipient est fait en une composition pour verre selon la revendication 1.

3. Récipient selon la revendication 2, lequel récipient est perméable à la lumière infrarouge.

4. Récipient selon la revendication 2 ou la revendication 3, lequel récipient a une épaisseur de paroi située dans la plage allant de 1 à 10 mm, de préférence de 2 à 7 mm, tout spécialement de 4 mm.

5. Récipient selon l'une quelconque des revendications 2 à 4, lequel récipient a une perméabilité à la lumière UV comprise entre 20 et 70 %, de préférence entre 40 et 50 %, tout spécialement d'environ 45 %.

6. Récipient selon l'une quelconque des revendications 2 à 5, lequel récipient a une perméabilité à la lumière IR d'au moins 10 %, de préférence d'au moins 20 %, mieux encore d'au moins 40 %, et tout spécialement d'environ 54 %.

7. Récipient selon l'une quelconque des revendications 2 à 6, lequel récipient contient un ou plusieurs produits naturels de haute qualité, de préférence la spiruline.

8. Utilisation d'une composition pour verre selon la revendication 1 pour un récipient en verre, de préférence en verre à vitre.

9. Verre fait d'une composition selon la revendication 1.
